# EUROPEAN PATENT APPLICATION

(11) **EP 3 852 327 A1**
(43) Date of publication of application: **21.07.2021**
(21) Application number: 18934417.9
(22) Date of filing: 31.10.2018
(51) Int. Cl.: H04L 29/06

(54) **EXCEPTION ACCESS BEHAVIOR IDENTIFICATION METHOD AND SERVER**

(30) Priority: 19.09.2018 CN 201811098879
(71) Applicant: Wangsu Science & Technology Co., Ltd., Shanghai 201800 (CN)
(72) Inventor: CHEN, Zhiyong, Shanghai 201800 (CN); WANG, Fengjie, Shanghai 201800 (CN)
(74) Representative: De Arpe Tejero, Manuel
(86) International application number: PCT/CN2018/113029
(87) International publication number: WO 2020/056857

(57) **Abstract**

The present disclosure provides a method and a server for recognizing abnormal access behavior. The method includes: receiving an access request sent by a client terminal and generating a recognition identifier for the client terminal based on the access request; obtaining device fingerprint information of the client terminal and generating a unique identifier based on the recognition identifier and the device fingerprint information; and sending the unique identifier to the client terminal and recognizing whether an access behavior of the client terminal is abnormal. The technical solutions provided by the present application can improve recognition accuracy of the abnormal access behavior.

## Description

### FIELD OF THE DISCLOSURE

The present disclosure relates to the field of Internet technologies, more particularly, relates to a method and a server for recognizing abnormal access behaviors.

### BACKGROUND

With the development of Internet technologies, network security issues have become increasingly important. Currently, malicious web crawlers frequently access enterprise servers, resulting in substantial burdens on the enterprise servers. To effectively block an access request initiated by a malicious crawler, an upper limit of the number of accesses in a certain time period may be imposed on an IP address of the malicious crawler. When the number of the accesses initiated from the IP address exceeds a certain threshold, subsequent access requests from the same IP address may be rejected.

However, the existing approach may affect normal users as well. For example, in a NAT (network address translation) environment, a same egress IP address may be shared by a plurality of users, resulting in a substantially high number of the access requests from the egress IP address. The existing approach may incorrectly block the access requests initiated from the egress IP address, resulting in access failures for the normal users. Thus, the existing approach for blocking the malicious crawler based on the IP address thereof is inaccurate and may inadvertently block the normal users.

### BRIEF SUMMARY OF THE DISCLOSURE

To solve the problem of the existing technology, the embodiments of the present disclosure provide a method and a server for recognizing an abnormal access behavior, thereby improving the recognition accuracy of the abnormal access behavior.

One aspect of the present application provides a method for recognizing an abnormal access behavior. The method includes: receiving an access request sent by a client terminal and generating a recognition identifier for the client terminal based on the access request; obtaining device fingerprint information of the client terminal and generating a unique identifier based on the recognition identifier and the device fingerprint information; and sending the unique identifier to the client terminal and recognizing whether an access behavior of the client terminal is abnormal.

Another aspect of the present application provides a server for recognizing an abnormal access behavior. The server includes: a recognition identifier generation unit configured for receiving an access request sent by a client terminal and generating a recognition identifier for the client terminal based on the access request; a unique identifier generation unit configured for obtaining device fingerprint information of the client terminal and generating a unique identifier for the client terminal based on the recognition identifier and the device fingerprint information; and an access behavior recognition unit configured for sending the unique identifier to the client terminal and recognizing whether the access behavior of the client terminal is abnormal based on the unique identifier.

Another aspect of the present application provides a server for recognizing an abnormal access behavior. The server includes: a memory configured for storing a computer program; and a processor configured for executing the computer program to implement the disclosed method for recognizing the abnormal access behavior.

In the embodiments provided by the present application, when the server receives the access request sent by the client terminal, the server may generate the recognition identifier for the client terminal based on the access request. In practical applications, the recognition identifier may be jointly determined by access information included in the access request and a randomly generated identification code. The access information included in the access request may include an IP address and UA information of the client terminal. After the recognition identifier for the client terminal is generated, device fingerprint information of the client terminal may be obtained. The device fingerprint information may represent the client terminal in multiple dimensions. For example, the device fingerprint information may include one or more of a client terminal language, a color depth, a pixel ratio of device physical pixels over device independent pixels, a current screen resolution, a browser language setting, parameters of an operating system, and a computer CPU model, etc. As such, the recognition identifier and the device fingerprint information may accurately define the client terminal. In the present application, the unique identifier of the client terminal may be generated based on the recognition identifier and the device fingerprint information. The client terminal may be distinguished from other client terminals by the unique identifier of the client terminal. Subsequently, the server may send the unique identifier back to the client terminal. The access requests sent subsequently by the normal user to the server will include the unique identifier thereof. On the other hand, the access request sent by the malicious crawler may not include the unique identifier. If the access request sent by the malicious crawler includes the unique identifier, the server may determine and track the access behavior of the malicious crawler through the unique identifier, thereby effectively recognizing the malicious crawler. As such, the server may determine whether the access behavior of the client terminal sending the access request is abnormal. In the embodiments of the present application, the recognition identifier and the device fingerprint information of the client terminal are combined to accurately represent the client terminal. Subsequently, the access behavior of the client terminal may be recognized and tracked through the unique identifier to determine whether the access behavior of the client terminal is abnormal. The embodiments of the present application may effectively distinguish the normal user from the malicious crawler, thereby improving the recognition accuracy of the abnormal access behavior.

### BRIEF DESCRIPTION OF THE DRAWINGS

In order to more clearly illustrate the technical solutions in the embodiments of the present disclosure, drawings used in the description of the embodiments will be briefly described below. The drawings in the following description are only some embodiments of the present disclosure. Other drawings may also be obtained by those of ordinary skill in the art without inventive work.
FIG. 1 illustrates a schematic diagram of an exemplary system including a server cluster and a client terminal according to disclosed embodiments;
FIG. 2 illustrates a flow chart of an exemplary method for recognizing an abnormal access behavior according to disclosed embodiments;
FIG. 3 illustrates a block diagram of an exemplary server according to disclosed embodiments; and
FIG. 4 illustrates a schematic diagram of an exemplary server according to disclosed embodiments.

### DETAILED DESCRIPTION

To make the objectives, technical solutions, and advantages of the present disclosure clearer, the following further describes the embodiments of the present disclosure in details with reference to the accompanying drawings.

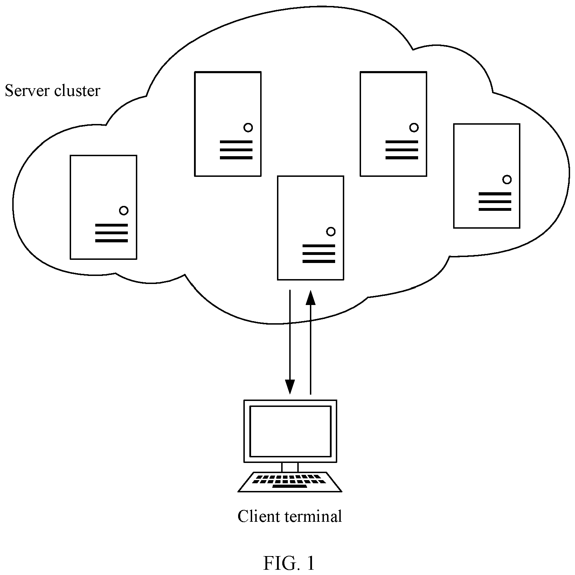

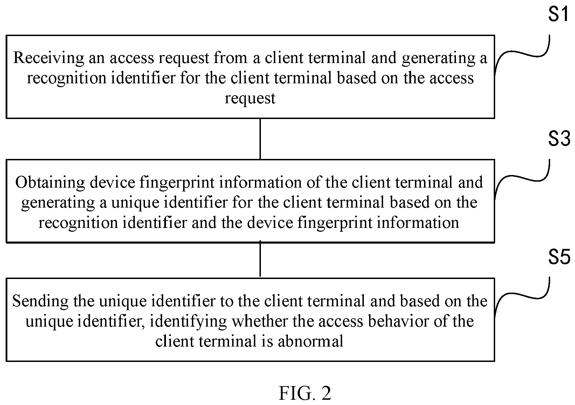

The present application provides a method for recognizing an abnormal access behavior. The method may be applied to servers. As shown in FIG. 1, an enterprise provides a service through a server in a server cluster. In response to an access request initiated by a client terminal, the server may return corresponding enterprise business data to the client terminal. The technical solution provided by the present application may be applied to the server in the server cluster. After receiving the access request sent by the client terminal, the server may evaluate an access behavior of the client terminal. In one embodiment, referring to FIG. 2, the method for recognizing the abnormal access behavior may include the following steps.

Step S1: receiving an access request from a client terminal and generating a recognition identifier for the client terminal based on the access request.

In one embodiment, the access request initiated by the client terminal may be accelerated by a CDN (content delivery network) and then may be forwarded to the server in the server cluster. After receiving the access request sent by the client terminal, the server may extract access information of the client terminal. For example, the access information may at least include an IP address and user-agent (UA) information of the client terminal. In general, a combination of the IP address and the UA information often accurately represents an identity of the client terminal. However, in practical applications, different client terminals may share a same IP address and UA information. For example, in a NAT mode, different client terminals may share the same egress IP address. In a NAT network architecture, different client terminals may share the same UA information. Thus, to more accurately represent the identity of the client terminal, an identification code of a specified length may be randomly generated. For example, the identification code of the specified length may be an 8-bit UUID (universally unique identifier). As such, by combining the access information and the identification code of the specified length, the IP address, the UA information, and the UUID may jointly define the client terminal. To secure the combination of the access information and the identification code, the combination of the access information and the identification code may be expressed in a form of an encryption key. For example, through a preset encryption algorithm, the combination of the access information and the identification code may be encrypted, and the encryption key as a result of the encryption may become the recognition identifier for the client terminal. In practical applications, the preset encryption algorithm may be one of DES (data encryption standard), 3DES (triple data encryption standard), DSA (digital signature algorithm), MD5 (message digest algorithm 5), or SHA (secure hash algorithm), etc. The preset encryption algorithm may generate the encryption key of a specified number of bits. For example, after the combination of the access information and the identification code is encrypted by the 3DES algorithm, a 16-bit encryption key may be generated. The 16-bit encryption key may become the recognition identifier for the client terminal.

Step S3: obtaining device fingerprint information of the client terminal and generating a unique identifier for the client terminal based on the recognition identifier and the device fingerprint information.

In one embodiment, after the server generates the recognition identifier for the client terminal, the server may further include certain setting information of the client terminal into the recognition identifier to improve the recognition accuracy of the client terminal. For example, the server may return response information to the client terminal in response to the access request sent by the client terminal. When the server returns the response information to the client terminal in response to the access request, the server may at the same time send a detection script to the client terminal. The detection script may be a JaveScript script. After the detection script is received by the client terminal, the detection script may be executed automatically at the client terminal. When being executed at the client terminal, the detection script may collect the device fingerprint information of the client terminal. The device fingerprint information may include one or more of a language, a color depth, a pixel ratio of device physical pixels over device independent pixels, a current screen resolution, a time difference between a local time and the GMT (Greenwich mean time) time, a browser language setting, audio parameters, an operating system and/or hardware platform of the browser, and a computer CPU model, etc. Because different users have different habits of using the client terminal, the device fingerprint information may define the client terminal from multiple dimensions of settings of the client terminal.

In one embodiment, after the server sends the detection script to the client terminal and obtains the device fingerprint information of the client terminal by executing the detection script, the server may further combine the device fingerprint information and the recognition identifier for the client terminal to jointly define the identity of the client terminal. Similarly, to secure the combination, the combination of the device fingerprint information and the recognition identifier may be expressed in the form of the encryption key. For example, the server may encrypt the combination of the recognition identifier and the device fingerprint information according to the preset encryption algorithm to obtain the encryption key of the specified length and may make the encryption key of the specified length as the unique identifier for the client terminal. In practical applications, the preset encryption algorithm may be one of the many encryption algorithms described in the description of the step S1. For example, the 3DES algorithm may be used to encrypt the combination of the recognition identifier and the device fingerprint information and to generate a 32-bit encryption key. The 32-bit encryption key becomes the unique identifier of the client terminal. In practical applications, the number of bits in the recognition identifier and the unique identifier may be configured during the encryption process according to user's requirements. It is not limited to generate the 16-bit recognition identifier and the 32-bit unique identifier.

Step S5: sending the unique identifier to the client terminal and based on the unique identifier, identifying whether the access behavior of the client terminal is abnormal.

In one embodiment, after the unique identifier of the client terminal is generated, the unique identifier may be sent to the client terminal in the form of cookie data. This approach serves the following purposes. The client terminal normally takes cookie data. When the client terminal sends a subsequent access request to the server, the access request may often include the unique identifier in the form of cookie data to allow the server to recognize and track the access behavior of the client terminal through the unique identifier included in the access request.

In one embodiment, the client terminal of a normal user may receive the unique identifier sent by the server. When the client terminal subsequently sends the access request to the server, the client terminal may include the unique identifier in the access request. On the contrary, the malicious crawler may refuse to receive the unique identifier sent by the server. Subsequently, when the malicious crawler sends again the access request to the server, the access request may not include the unique identifier sent by the server.

In one embodiment, the server may again receive the access request sent by the client terminal and may determine whether the access request includes the unique identifier. If the access request does not include the unique identifier, it indicates that the client terminal refuses to receive the unique identifier sent by the server. At this time, it is determined that the access behavior of the client terminal is abnormal.

In one embodiment, some of the malicious crawlers may disguise as the normal client terminal to receive the unique identifier sent by the server and to include the unique identifier in the access requests sent subsequently. In this case, the server may recognize the access requests over a time period from the client terminal based on the unique identifier included in the access requests and may analyze the access behavior of the client terminal based on the recognized access requests. Considering that the malicious crawler often sends the access requests frequently in a short period of time, whether the access behavior of the client terminal is abnormal may be determined by calculating an access frequency of the access requests sent by the client terminal. For example, if the access requests sent by the client terminal include the unique identifier, the server may measure the access frequency of the access requests sent by the client terminal. The server may count the number of the access requests sent by the client terminal in a specified time interval and then calculate the number of the number of the access requests sent by the client terminal in a unit time to determine the access frequency of the client terminal. Then, if the access frequency is greater than or equal to a specified frequency threshold, it indicates that the access behavior of the client terminal is excessive and is determined to be abnormal. The specified frequency threshold may be configured based on the access frequencies of the normal users. For example, the specified frequency threshold may be an upper limit of the access frequencies of the normal users or may be the upper limit plus a certain margin.

In one embodiment, considering that some resources in the enterprise servers are sensitive resources, client terminals from outside networks may often be prevented from accessing the sensitive resources. While the client terminals of the normal users may be unlikely to access the sensitive resources, the malicious crawlers may attempt to access any links they obtain. In view of this, whether the access behavior of the client terminal is abnormal may be determined by recognizing whether the access request sent by the client terminal points to any sensitive target. For example, if the access request sent by the client terminal includes the unique identifier, the server may recognize an access target indicated in the access request. The access target may often be recognized through a URL (uniform resource locator) included in the access request. If the access target is a sensitive target, the server may determine that the access behavior of the client terminal is abnormal.

In one embodiment, when the normal user sends the access request for a website resource, the normal user may often enter a homepage address of the website in a browser or may click a link in a current webpage to jump to the webpage to be visited. In other words, when visiting the webpage resource, the normal user may get to the homepage of the website by directly entering the address of the homepage, and may get to other webpages by clicking links in a search result webpage of Baidu or Google or links in the homepage. Thus, the accesses to different webpages by the normal user may often include contextual references. For example, the user enters "xx technology" in Baidu search engine and an official homepage address of the "xx technology" may appear in Baidu search result webpage. The user may access the homepage of the "xx technology" by clicking the official homepage address. The homepage may display services provided by the "xx technology". As such, the user may click a link for "CDN server rental" to access details of the CDN server rental service. The contextual references in the above example include Baidu - official homepage - CDN server rental. The contextual references exist between webpages. For example, the user ultimately wants to access the CDN server rental webpage. The reference webpage to the CDN server rental webpage is the official homepage. The reference webpage to the official homepage is Baidu search result webpage. The contextual references between the webpages may be recorded in *referer* field of the access request. For example, *referer* field of the access request for the CDN server rental webpage may record the identifier for the official homepage. Correspondingly, *referer* field of the access request for the official homepage may record the identifier for Baidu search result webpage. However, the malicious crawler may not access the ultimate webpage through a layered search method. Instead, the malicious crawler may access the ultimate webpage directly through the link to the CDN server rental webpage. In other words, the malicious crawler may often use the webpage address of the to-be-accessed webpage to directly access the webpage. Thus, *referer* field of the access request sent by the malicious crawler is often empty without a preceding reference webpage.

In view of this, in one embodiment, if the access request sent by the client terminal includes the unique identifier, the server may recognize whether the access request includes a request source. The request source may be indicated in *referer* field of the access request. For example, the server may recognize a content in *referer* field of the access request. If *referer* field includes the identifier of the webpage, the webpage identified by the identifier of the webpage may be the request source for the access request.

In one embodiment, the server may count the number of target access requests that do not include the request sources out of all the access requests sent by the client terminal in a specified time period. If the counted number is greater than or equal to a specified threshold, it indicates that most of the access requests sent by the client terminal in the specified time period do not include a corresponding reference webpage and are directly based on the webpage addresses. This access behavior is similar to the access behavior of the malicious crawler. Thus, the access behavior of the client terminal may be determined to be abnormal.

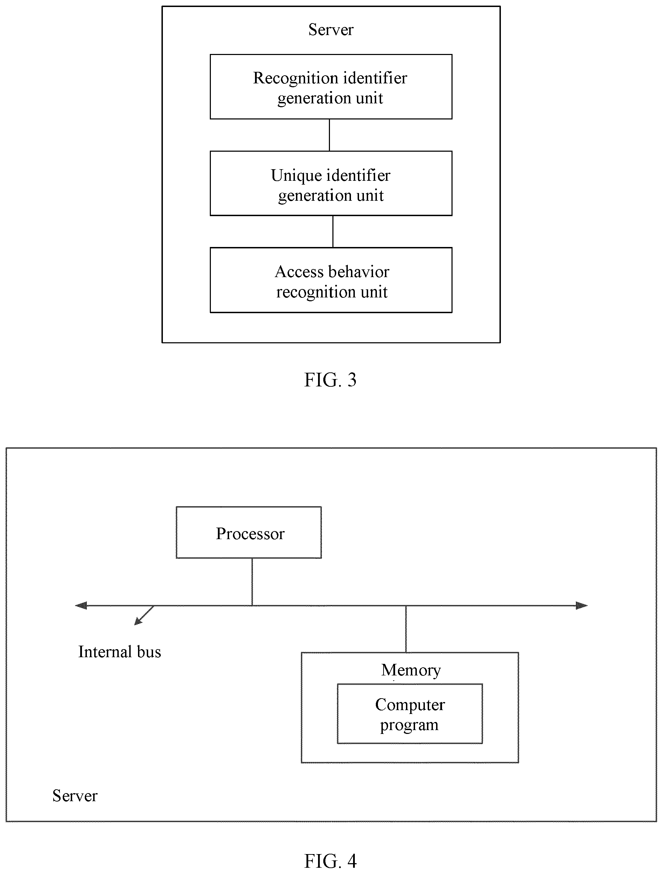

Referring to FIG. 3, the present application also provides a server. The server includes a recognition identifier generation unit configured for receiving the access request sent from the client terminal and generating the recognition identifier for the client terminal based on the access request, a unique identifier generation unit configured for obtaining the device fingerprint information of the client terminal and generating the unique identifier for the client terminal based on the recognition identifier and the device fingerprint information, and an access behavior recognition unit configured for sending the unique identifier to the client terminal and recognizing whether the access behavior of the client terminal is abnormal based on the unique identifier.

In one embodiment, the recognition identifier generation unit includes an access information extraction module configured to extract the access information of the client terminal from the access request where the access information includes at least the IP address and the UA information of the client terminal, and an encryption module configured to randomly generate the identification code of the specified length and to encrypt the combination of the identification code and the access information to generate the recognition identifier for the client terminal.

In one embodiment, the unique identifier generation unit includes a script sending module configured to send the detection script to the client terminal when the server returns the response information to the client terminal in response to the access request. When being executed at the client terminal, the detection script may collect the device fingerprint information of the client terminal.

In one embodiment, the access behavior recognition unit includes an identifier recognition module configured to receive again the access request sent by the client terminal and to recognize whether the access request includes the unique identifier. If the access request does not include the unique identifier, it is determined that the access behavior of the client terminal is abnormal.

Referring to FIG. 4, the present application also provides a server. The server includes a memory configured for storing a computer program and a processor configured for executing the computer program to implement the method for recognizing the abnormal access behavior.

In the embodiments provided by the present application, when the server receives the access request sent by the client terminal, the server may generate the recognition identifier for the client terminal based on the access request. In practical applications, the recognition identifier may be jointly determined by the access information included in the access request and the randomly generated identification code. The access information included in the access request may include the IP address and the UA information of the client terminal. After the recognition identifier for the client terminal is generated, the device fingerprint information of the client terminal may be obtained. The device fingerprint information may represent the client terminal in multiple dimensions. For example, the device fingerprint information may include one or more of the language, the color depth, the pixel ratio of device physical pixels over device independent pixels, the current screen resolution, the time difference between the local time and the GMT (Greenwich mean time) time, the browser language setting, the audio parameters, the operating system and/or hardware platform of the browser, and the computer CPU model, etc. As such, the recognition identifier and the device fingerprint information may accurately define the client terminal. In the present application, the unique identifier of the client terminal may be generated based on the recognition identifier and the device fingerprint information. The client terminal may be distinguished from other client terminals by the unique identifier of the client terminal. Subsequently, the server may send the unique identifier back to the client terminal. The access requests sent subsequently by the normal user to the server will include the unique identifier thereof. On the other hand, the access request sent by the malicious crawler may not include the unique identifier. If the access request sent by the malicious crawler includes the unique identifier, the server may determine and track the access behavior of the malicious crawler through the unique identifier, thereby effectively recognizing the malicious crawler. As such, the server may determine whether the access behavior of the client terminal sending the access request is abnormal. In the embodiments of the present application, the recognition identifier and the device fingerprint information of the client terminal are combined to accurately represent the client terminal. Subsequently, the access behavior of the client terminal may be recognized and tracked through the unique identifier to determine whether the access behavior of the client terminal is abnormal. The embodiments of the present application may effectively distinguish the normal user from the malicious user, thereby improving recognition accuracy of the abnormal access behavior.

It should be understood by those skilled in the art that all or a portion of the steps of the above described embodiments may be implemented in hardware or in a computer program to instruct relevant hardware. The embodiments of the present application may be implemented in the computer program. The computer program may be stored in a computer readable storage medium. The storage medium may be a read-only memory, a magnetic disk, or an optical disk, etc. The computer program may include instructions to instruct a computer (e.g., a personal computer, a server, or a networking device, etc.) to perform the entire or a portion of the method described in the embodiments of the present application.

It should be understood by those skilled in the art that the foregoing are merely certain preferred embodiments of the present disclosure and are not intended to limit the present disclosure. Without departing from the spirit and principles of the present disclosure, any modifications, equivalent substitutions, and improvements, etc. shall fall within the scope of the present disclosure.

## Claims

1. A method for recognizing abnormal access behavior, comprising:
receiving an access request sent by a client terminal and generating a recognition identifier for the client terminal based on the access request;
obtaining device fingerprint information of the client terminal and generating a unique identifier based on the recognition identifier and the device fingerprint information; and
sending the unique identifier to the client terminal and recognizing whether an access behavior of the client terminal is abnormal.

2. The method of claim 1, wherein generating the recognition identifier for the client terminal based on the access request includes:
extracting access information of the client terminal from the access request, wherein the access information includes at least an IP address of the client terminal and user-agent information of the client terminal; and
randomly generating an identification code of a specified length and encrypting a combination of the recognition identifier and the access information to generate the recognition identifier for the client terminal.

3. The method of claim 1, wherein obtaining the device fingerprint information of the client terminal includes:
when returning response information to the client terminal in response to the access request, sending a detection script to the client terminal at the same time; and
after the detection script is executed at the client terminal, collecting the device fingerprint information of the client terminal.

4. The method of any of claims 1-3, wherein generating the unique identifier based on the recognition identifier and the device fingerprint information includes:
encrypting the combination of the recognition identifier and the device fingerprint information to obtain an encryption key of a specified length and making the encryption key of the specified length as the unique identifier for the client terminal.

5. The method of claim 1, wherein sending the unique identifier to the client terminal includes:
sending the unique identifier to the client terminal in the form of cookie data.

6. The method of claim 1, wherein recognizing whether the access behavior of the client terminal is abnormal includes:
receiving again the access request sent by the client terminal and recognizing whether the access request includes the unique identifier; and
if the access request does not include the unique identifier, determining that the access behavior of the client terminal is abnormal.

7. The method of claim 6, further including:
if the access request sent by the client terminal includes the unique identifier, measuring an access frequency of the access requests sent by the client terminal; and
if the access frequency is greater than or equal to a specified frequency threshold, determining that the access behavior of the client terminal is abnormal.

8. The method of claim 6, further including:
if the access request sent by the client terminal includes the unique identifier, recognizing an access target indicated in the access request; and
if the access target is a sensitive target, determining that the access behavior of the client terminal is abnormal

9. The method of claim 6, further including:
if the access request sent by the client terminal includes the unique identifier, recognizing whether the access request includes a request source;
counting the number of target access requests that do not include the request sources out of all the access requests sent by the client terminal in a specified time period; and
if the counted number is greater than or equal to a specified threshold, determining that the access behavior of the client terminal is abnormal.

10. The method of claim 9, wherein recognizing whether the access request includes the request source includes:
recognizing a content in *referer* field of the access request;
if *referer* field is empty, determining that the access request does not include the request source; and
if *referer* field includes an identifier of a webpage, determining that the webpage identified by the identifier of the webpage is the request source for the access request.

11. A server for recognizing an abnormal access behavior, comprising:
a recognition identifier generation unit configured for receiving an access request sent by a client terminal and generating a recognition identifier for the client terminal based on the access request;
a unique identifier generation unit configured for obtaining device fingerprint information of the client terminal and generating a unique identifier for the client terminal based on the recognition identifier and the device fingerprint information; and
an access behavior recognition unit configured for sending the unique identifier to the client terminal and recognizing whether the access behavior of the client terminal is abnormal based on the unique identifier.

12. The server of claim 11, wherein the recognition identifier generation unit includes:
an access information extraction module configured to extract access information of the client terminal from the access request, wherein the access information includes at least an IP address and UA information of the client terminal; and
an encryption module configured to randomly generate an identification code of a specified length and to encrypt the combination of the identification code and the access information to generate the recognition identifier for the client terminal.

13. The server of claim 11, wherein the unique identifier generation unit includes:
a script sending module configured to send a detection script to the client terminal when the server returns the response information to the client terminal in response to the access request, wherein when being executed at the client terminal, the detection script collects the device fingerprint information of the client terminal.

14. The server of claim 11, wherein the access behavior recognition unit includes:
an identifier recognition module configured to receive again the access request sent by the client terminal and to recognize whether the access request includes the unique identifier, wherein if the access request does not include the unique identifier, it is determined that the access behavior of the client terminal is abnormal.

15. A server for recognizing an abnormal access behavior, comprising:
a memory configured for storing a computer program; and
a processor configured for executing the computer program to implement the method of any of claims 1-10.
